# EUROPÄISCHE PATENTANMELDUNG

(11) **EP 4 057 370 A2**
(43) Veröffentlichungstag der Anmeldung: **14.09.2022**
(21) Anmeldenummer: 22159527.5
(22) Anmeldetag: 01.03.2022
(51) Int. Cl.: H01M 4/00

(54) **BATTERIEANORDNUNG**

(30) Priorität: 11.03.2021 DE 102021105935
(71) Anmelder: VOLKSWAGEN AG, 38440 Wolfsburg (DE)
(72) Erfinder: Zlatkov, Branislav, 38104 Braunschweig (DE); Tietje, Robert, 29364 Langlingen (DE); Brinkhaus, Linda, 38102 Braunschweig (DE); Renna, Matthew, Redwood City, CA 94062 (US)
(74) Vertreter: karo IP

(57) **Zusammenfassung**

Batterieanordnung (1), zumindest umfassend
• ein Gehäuse (2) und darin angeordnet
• zumindest eine Batteriezelle (3) sowie
• ein Barriereelement (4), das zwischen der Batteriezelle (3) und dem Gehäuse (2) angeordnet ist;
wobei das Barriereelement (4) einen mehrschichtigen Aufbau mit mindestens zwei Schichten (5, 6) aufweist; wobei eine erste Schicht (5) zumindest eine porösen Polymermatrix und eine zweite Schicht (6) zumindest ein gasdurchlässiges hochtemperaturfestes Material umfasst.

## Beschreibung

Die Erfindung betrifft eine Batterieanordnung. Die Batterieanordnung umfasst ein Gehäuse und darin angeordnet zumindest eine Batteriezelle sowie ein Barriereelement, das zwischen der Batteriezelle und dem Gehäuse angeordnet ist.

Eine Batteriezelle ist ein Stromspeicher, der z. B. in einem Kraftfahrzeug zum Speichern von elektrischer Energie eingesetzt wird. Insbesondere weist z. B. ein Kraftfahrzeug einen Traktionsantrieb (elektrische Maschine) zum Antrieb des Kraftfahrzeuges auf, wobei die elektrische Maschine durch die in der Batteriezelle gespeicherte elektrische Energie antreibbar ist.

Ein Batteriemodul umfasst insbesondere eine oder eine Mehrzahl von Batteriezellen, die miteinander elektrisch in Reihe oder parallel geschaltet sind. Einzelne Module können miteinander elektrisch in Reihe oder parallel geschaltet werden. Eine Batterieanordnung umfasst mindestens ein oder ggf. mehrere Module.

Ein vorrangiges Ziel bei der Entwicklung von Batterieanordnungen ist es, das sämtliche mechanische Lastfälle ohne Brand und ohne Kurzschluss ertragen werden müssen. Gerade bei Lithium-Ionen Batteriezellen können mechanische Beschädigungen, hohe Temperaturen oder zu hohe elektrische Ströme zu einem thermischen Durchgehen (thermal runaway) führen.

Während eines thermischen Durchgehens erhöht sich die Temperatur einer Batteriezelle kontinuierlich und teilweise exponentiell aufgrund der exothermen Reaktionen der Komponenten der Batteriezelle. Dabei können Temperaturen von bis zu 1.000 °C und höher erreicht werden, wobei zusätzlich ggf. gesundheitsgefährdende und/ oder brennbare Gase freigesetzt werden können.

Die ein thermisches Durchgehen beeinflussenden Parameter umfassen einerseits die Komponenten der Batteriezelle (z. B. Kathode, Anode, Separator, Elektrolyt) und können andererseits chemische, elektrochemische, technische sowie pulvermetallurgische Eigenschaften dieser Komponenten betreffen. Gerade die pulvermetallurgischen Bestandteile (Elektrodenbeschichtungen) können z. B. Sauerstoff enthalten, der ein thermisches Durchgehen begünstigt.

Ein thermisches Durchgehen ist in jedem Fall zu vermeiden, da ein einziger derartiger Vorfall an nur einer Batteriezelle eine Zerstörung eines ganzen Moduls, einer Batterieanordnung oder sogar eines die Batterieanordnung aufweisenden Kraftfahrzeugs bewirken kann. Bei einem thermischen Durchgehen werden große Mengen an Gasen erzeugt, ein flüssiger Elektrolyt kann sich entzünden und benachbart zu der Batteriezelle angeordnetes Material kann verbrennen und/ oder zerstört werden. Unmittelbar vor dem thermischen Durchgehen kann bereits ein hochexplosives und reaktives Gemisch verschiedener Gase erzeugt werden, z. B. umfassend Wasserstoff, Kohlendioxid, Kohlenmonoxid, Ethan, Methan, etc., das von Pulverteilchen umgeben und in einer gasförmigen und/ oder flüssigen Umgebung angeordnet ist. Nach dem Durchbruch des Gasgemisches aus der Batteriezelle reagiert dieses mit der die Batteriezelle ggf. umgebenden Luft, so dass sich die exotherme Reaktion exponentiell beschleunigt.

Eine derartige explosionsartige Reaktion kann die Batteriezelle umgebenden Komponenten erfassen und schädigen, so dass ggf. eine Kettenreaktion ausgelöst wird.

Aus der US 2016/0218336 A1 ist eine Schutzbarriere für eine Batteriezelle bzw. ein Batteriemodul bekannt. Die Schutzbarriere umfasst ein thermisch widerstandsfähiges Material und weist einen Entlüftungskanal auf, der sich ausgehend von einem Entlüftungsventil der Batteriezelle hin zu einem Entlüftungsventil eines Gehäuses, in dem die Batteriezelle angeordnet ist, erstreckt.

Aus der US 2010/0255359 A1 ist eine Batterieanordnung mit einem Wärmeabsorbtionsmaterial bekannt, wobei das Wärmeabsorbtionsmaterial eine Höchsttemperatur von aus einer Batteriezelle der Batterieanordnung entweichenden Gasen auf 300 °Celsius beschränkt. Es werden verschiedene Materialien als Wärmeabsorbtionsmaterial vorgeschlagen, z. B. Metall, Keramik, Sand, Flüssigkeiten und Gase.

Aus der TWI670887 B ist eine Schutzstruktur zur Begrenzung eines thermischen Durchgehens (thermal runaway) einer Batteriezelle bekannt. Erreicht eine Temperatur der Batteriezelle eine kritische Temperatur kann aus einer dadurch aufbrechenden Kammer der Batteriezelle ein Löschmaterial austreten und so einen Abbrand der Batteriezelle verhindern.

Aufgabe der vorliegenden Erfindung ist es, die mit Bezug auf den Stand der Technik angeführten Probleme zumindest teilweise zu lösen. Insbesondere soll eine Batterieanordnung vorgeschlagen werden, die möglichst effektiv vor einem thermischen Durchgehen geschützt ausgeführt ist. Weiter soll ein Volumenstrom der ggf. in der Batterieanordnung entstehenden Gase gedämpft bzw. absorbiert werden.

Zur Lösung dieser Aufgaben trägt eine Batterieanordnung mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird eine Batterieanordnung vorgeschlagen, zumindest umfassend
- ein Gehäuse und darin angeordnet
- zumindest eine Batteriezelle sowie
- ein Barriereelement, das zwischen der Batteriezelle und dem Gehäuse angeordnet ist. Das Barriereelement weist einen mehrschichtigen Aufbau mit mindestens zwei Schichten auf. Eine erste Schicht umfasst zumindest eine poröse Polymermatrix bzw. einen porösen Kunststoff und eine zweite Schicht zumindest ein gasdurchlässiges und hochtemperaturfestes Material, z. B. ein keramisches Material.

Das Gehäuse umschließt die mindestens eine Batteriezelle bzw. eine Mehrzahl von Batteriezellen. Das Gehäuse umfasst insbesondere mindestens ein Batteriemodul. Das Batteriemodul umfasst insbesondere eine oder eine Mehrzahl von Batteriezellen, die miteinander elektrisch in Reihe oder parallel geschaltet sind. Einzelne Batteriemodule können miteinander elektrisch in Reihe oder parallel geschaltet werden. Eine Batterieanordnung umfasst also mindestens ein oder ggf. mehrere Batteriemodule. Das Gehäuse dient insbesondere der gegenüber einer Umgebung des Gehäuses zumindest flüssigkeitsdichten Anordnung des mindestens einen Batteriemoduls innerhalb des Gehäuses.

Das Barriereelement ist insbesondere unabhängig von dem Gehäuse hergestellt. Das Barriereelement ist insbesondere entlang jeder räumlichen Dimension (also entlang einer x-, y- und z-Richtung) zumindest gasdurchlässig oder auch flüssigkeitsdurchlässig ausgeführt. Das Barriereelement kann an dem Gehäuse befestigt angeordnet sein.

Das Barriereelement dient insbesondere zumindest
- zur Absorption bzw. Verringerung der Energie einer Explosion und ihrer Fortpflanzung über das Barriereelement hinweg;
- zur Aufnahme und zumindest teilweisen Zurückhaltung und/ oder Abkühlung von Partikeln, insbesondere pulverförmigen Partikeln, die (z. B. bei einem thermischen Durchgehen) aus der mindestens einen Batteriezelle heraustreten oder in der Umgebung der Batteriezelle freigesetzt werden; wobei die Aufnahme bzw. das Zurückhalten durch ein Einlagern der Partikel in dem Barriereelement und/ oder durch ein Verdrängen oder Auflösen (z. B. durch Aufschmelzen oder Vergasen) des Materials des Barrierelements erfolgt;
- zur Abbremsung und/ oder zumindest teilweisen Absorption eines aus der Batteriezelle (z. B. bei einem thermischen Durchgehen) aus der mindestens einen Batteriezelle heraustretenden oder in der Umgebung der Batteriezelle freigesetzten Gasstroms, wobei Gasmoleküle infolge des Durchströmens des Barriereelements abgekühlt und Partikel zumindest teilweise sukzessive aus dem Gasstrom abgeschieden werden;
- zur Verhinderung einer Ausbreitung von offenem Feuer auf andere, zur Batteriezelle bzw. zum Barriereelement benachbarte, Komponenten der Batterieanordnung;
- zur Verhinderung einer Beschädigung von anderen, zur Batteriezelle bzw. zum Barriereelement benachbarten, Komponenten der Batterieanordnung;
- zur Verringerung von durch Beschädigung einer Batteriezelle hervorgerufenen Geräuschen;
- zur gezielten Umleitung von aus der Batteriezelle (z. B. bei einem thermischen Durchgehen) aus der mindestens einen Batteriezelle heraustretenden oder in der Umgebung der Batteriezelle freigesetzten Gasen bzw. Partikeln, z. B. hin zu vorbestimmbaren Abblasvorrichtungen am Gehäuse, über die ein in dem Gehäuse vorliegender Überdruck an die Umgebung des Gehäuses abgeführt werden kann oder zumindest hin zu Zwischenräumen zwischen bzw. weg von Batteriezellen.

Das hochtemperaturfeste Material des Barriereelements ist insbesondere nicht exotherm umsetzbar (zumindest nicht bei Temperaturen bis ca. 1.000 °Celsius). Insbesondere werden bei einer thermischen oder chemischen Umsetzung eines Materials des Barriereelements keine brand- oder explosionsfördernden Verbindungen freigesetzt.

Insbesondere kann das Material des Barriereelements zumindest teilweise aus recycelten Materialien hergestellt werden.

Insbesondere ist das Material des Barriereelements umformbar und damit einfach an spezifische räumliche Begebenheiten in dem Gehäuse anpassbar.

Insbesondere ist das hochtemperaturfeste Material ein poröser keramischer Schaum, eine poröse keramische Faser oder ein keramisches Gewebe. Ein keramisches Material ist besondere temperaturbeständig und dabei insbesondere formstabil. Insbesondere kann das keramische Material als Auflage für die mindestens eine weitere, insbesondere die erste, Schicht eingesetzt werden.

Die erste Schicht umfasst insbesondere eine Polymermatrix bzw. ein temperaturbeständiges Polymermatrixmaterial. Unter einer Polymermatrix werden unterschiedliche Zusammensetzungen von Materialien, die temperaturstabile Polymere wie z. B. Harzen, Silikone und anderen Duroplaste sind, verstanden. Die poröse Polymermatrix kann zumindest teilweise, ggf. auch unterschiedliche, Mineralienstoffe, Mineralienfaser oder sogar Stahlfaser aufweisen.

Insbesondere ist die poröse Polymermatrix ein Schaum oder eine poröse Folie. Eine Polymermatrix dient insbesondere dem sukzessiven Abbau der Energie des aus einer Schädigung einer Batteriezelle entstehenden Gas- bzw. Partikelstroms. Insbesondere kann die Polymermatrix dabei teilweise aufgeschmolzen und/ oder vergast werden. Insbesondere können über die Polymermatrix Partikel sukzessive aus dem Gasstrom herausgefiltert werden.

Die Polymermatrix kann entweder offen oder geschlossen porös ausgeführt sein. Bei geschlossen poröser Ausführung können die geschlossenen Poren auch mit einem inerten und/oder zumindest nicht brennbaren Gas gefüllt sein.

Insbesondere weist das Barriereelement zumindest eine dritte Schicht auf, die ein metallisches Material umfasst.

Das metallische Material ist insbesondere ein faserförmiges oder ein poröses Material. Das metallische Material kann z. B. als ein Gewebe (mit geordneter Struktur der Fasern, also z. B. verwoben) oder als ein Vlies (mit unstrukturierter Anordnung der Fasern aufeinander) oder als feine Wolle etc. ausgeführt sein.

Das metallische Material kann insbesondere entweder offen oder geschlossen porös ausgeführt sein. Bei geschlossen poröser Ausführung können die geschlossenen Poren auch mit einem inerten und/oder zumindest nicht brennbaren Gas gefüllt sein.

Jede Schicht erstreckt sich insbesondere entlang einer Ebene, wobei die Schichten in parallelen Ebenen aufeinander gestapelt angeordnet sind. Die Schichten sind ausgehend von der mindestens einen Batteriezelle hintereinander angeordnet.

Insbesondere weist das Barriereelement mindestens eine, in einer von der mindestens einen Batteriezelle abgewandten Schicht angeordnete, Öffnung auf, über die ein von der Batteriezelle ausgehender Gasstrom bzw. Partikelstrom über das Barriereelement abgeführt werden kann.

Insbesondere ist die zweite Schicht zumindest durch eine andere Schicht, insbesondere durch mindestens eine erste Schicht und/ oder durch mindestens eine dritte Schicht, von der mindestens einen Batteriezelle getrennt angeordnet. Die Schichten können aber auch in anderer Anordnung bzw. Reihenfolge angeordnet sein.

Bevorzugte Zusammensetzungen von Barriereelementen umfassen z. B.
- als erste Schicht eine poröse Polymermatrix und als zweite Schicht ein keramisches Gewebe, oder keramische Wolle
- als erste Schicht eine poröse Polymermatrixfolie, als zweite Schicht eine poröse keramische Schicht sowie zwei dritte Schichten, ein metallisches Vlies und ein gesintertes poröses, metallisches Gewebe;
- als erste Schicht eine poröse Polymermatrix, als zweite Schicht einen porösen keramischen Schaum und als dritte Schicht metallische Fasern, z. B. als Gewebe.

Insbesondere sind innerhalb des Gehäuses eine Mehrzahl von Batteriezellen angeordnet, wobei zwischen jeder Batteriezelle mindestens ein Barriereelement angeordnet ist. Insbesondere kann so eine von einer Batteriezelle ausgehende Schädigung, also ein Gas- und/ oder Partikelstrom vor einem Übergreifen auf andere Batteriezellen eingedämmt, gestoppt oder umgelenkt werden.

Insbesondere weist das Gehäuse mindestens eine Abblasvorrichtung auf, wobei im Fall eines aus der mindestens einen Batteriezelle in das Gehäuse hinein austretenden Bestandteils der Batteriezelle und bei Überschreiten eines Grenzdruckes in dem Gehäuse ein Überdruck über die mindestens eine Abblasvorrichtung an eine Umgebung des Gehäuses abbaubar ist. Insbesondere ist die Abblasvorrichtung so angeordnet, dass der Abbau des Überdrucks an einen vorbestimmbaren Bereich außerhalb des Gehäuses erfolgt.

Insbesondere ist die Batterieanordnung zur Anordnung in einem Kraftfahrzeug in einer Position relativ zu einer Fahrgastzelle des Kraftfahrzeugs vorgesehen, wobei das mindestens eine Barriereelement zumindest die mindestens eine Batteriezelle von der Fahrgastzelle zumindest teilweise abschirmt. Insbesondere ist das mindestens eine Barriereelement gerade nicht zwischen einer Batteriezelle und einem Boden, auf dem ein Kraftfahrzeug bewegt wird, angeordnet. Damit kann eine Schädigung z. B. ausgehend von der Batteriezelle durch das mindestens eine Barriereelement hin zu dem Boden umgelenkt werden.

Es wird weiterhin ein Kraftfahrzeug vorgeschlagen, zumindest umfassend eine Traktionseinheit zum Antrieb des Kraftfahrzeuges und die beschriebene Batterieanordnung zur Speicherung einer für den Antrieb der Traktionseinheit erforderlichen Energiemenge.

Die Ausführungen zu der Batterieanordnung sind insbesondere auf das Kraftfahrzeug übertragbar und umgekehrt.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile, für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine erste Ausführungsvariante einer Batterieanordnung mit mehreren Batteriemodulen in einem Kraftfahrzeug in einer Seitenansicht im Schnitt;
- Fig. 2:: eine zweite Ausführungsvariante einer Batterieanordnung mit mehreren Batteriemodulen in einem Kraftfahrzeug in einer Seitenansicht im Schnitt;
- Fig. 3:: ein Gehäuse für eine Batterieanordnung in einer perspektivischen Ansicht;
- Fig 4:: eine erste Ausführungsvariante eines Barriereelements;
- Fig. 5:: eine zweite Ausführungsvariante eines Barriereelements; und
- Fig. 6:: eine dritte Ausführungsvariante eines Barriereelements.

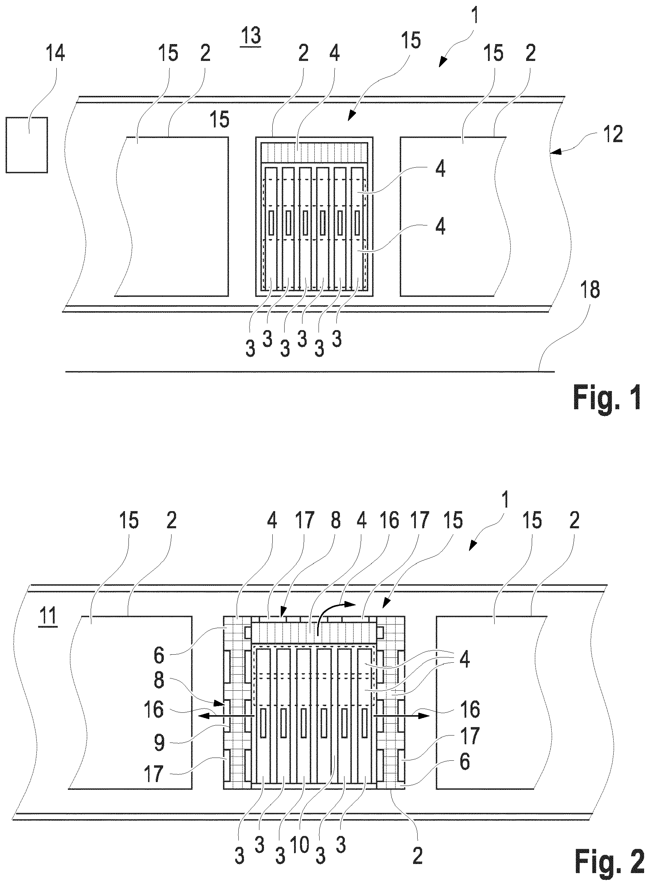

Fig. 1 zeigt eine erste Ausführungsvariante einer Batterieanordnung 1 mit mehreren Batteriemodulen 15 in einem Kraftfahrzeug 12 in einer Seitenansicht im Schnitt. Dargestellt ist ein Unterbodenbereich eines Kraftfahrzeugs 12, also der Bereich zwischen einer Fahrgastzelle 13 und einem Boden 18, über den das Kraftfahrzeug 12 hinwegbewegt wird. Die Batterieanordnung 1 wird zur Speicherung einer für den Antrieb einer Traktionseinheit 14 erforderlichen Energiemenge verwendet. In dem Unterbodenbereich sind drei Gehäuse 2 mit jeweils einem Batteriemodul 15 angeordnet. Das mittlere Batteriemodul 15 ist geschnitten dargestellt. Innerhalb des Gehäuses 2 sind eine Mehrzahl von Batteriezellen 3 angeordnet. An den Seiten (hinter und vor der Zeichnungsebene) und oberhalb der Batteriezellen 3 sind Barriereelemente 4 angeordnet.

Fig. 2 zeigt eine zweite Ausführungsvariante einer Batterieanordnung 1 mit mehreren Batteriemodulen 15 in einem Kraftfahrzeug 12 in einer Seitenansicht im Schnitt. Auf die Ausführungen zu Fig. 1 wird Bezug genommen.

Hier sind auch Barriereelemente 4 an den hin zu den anderen Batteriemodulen 15 orientierten Seiten des mittleren Batteriemoduls 15 angeordnet.

Die Barriereelemente 4 weisen jeweils eine Mehrzahl von, in einer von der mindestens einen Batteriezelle 3 abgewandten Schicht 5, 6, 7 angeordnete, Öffnung 17 auf, über die ein von der Batteriezelle 3 ausgehender Gas- bzw. Partikelstrom 16 über das Barriereelement 4 hin zum Gehäuse 2 abgeführt werden kann.

Das Gehäuse 2 weist eine Mehrzahl von Abblasvorrichtungen 8 auf, wobei im Fall eines aus einer Batteriezelle 3 in das Gehäuse 2 hinein austretenden Bestandteils 9 der Batteriezelle 3 und bei Überschreiten eines Grenzdruckes 10 in dem Gehäuse 2 ein Überdruck über die Abblasvorrichtungen 8 an eine Umgebung 11 des Gehäuses 2 abbaubar ist.

Insbesondere sind die Abblasvorrichtungen 8 so angeordnet, dass der Abbau des Überdrucks an einen vorbestimmbaren Bereich außerhalb des Gehäuses 2 erfolgen kann. Damit kann der Gas- und/ oder Partikelstrom 16 z. B. in Freiräume zwischen den einzelnen Batteriemodulen 15 abgeführt werden. Die Abblasvorrichtungen 8 bzw. Entlüftungsöffnungen können jeweils gleiche oder auch voneinander unterschiedliche geometrische Gestaltungen aufweisen.

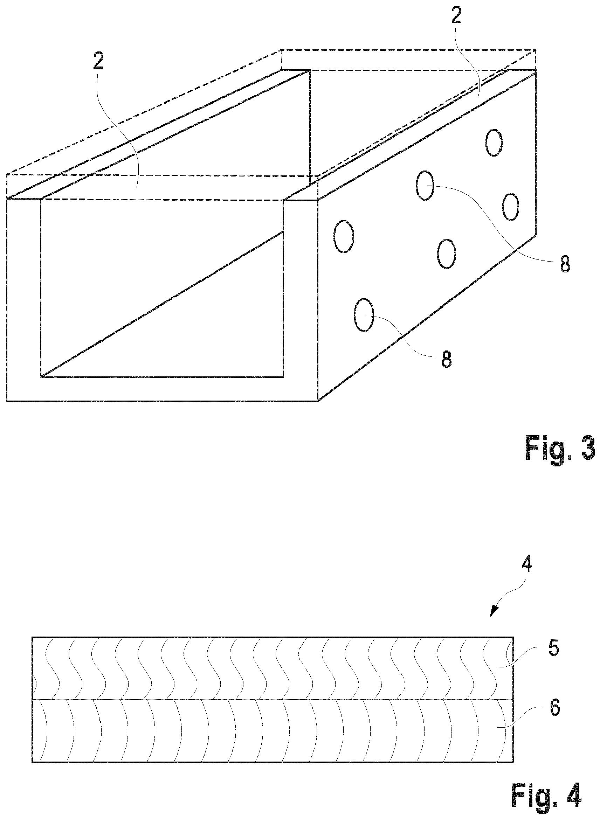

Fig. 3 zeigt ein Gehäuse 2 für eine Batterieanordnung 1 in einer perspektivischen Ansicht. Das Gehäuse 2 weist eine Mehrzahl von Abblasvorrichtungen 8 auf, wobei im Fall eines aus einer Batteriezelle 3 in das Gehäuse 2 hinein austretenden Bestandteils 9 der Batteriezelle 3 und bei Überschreiten eines Grenzdruckes 10 in dem Gehäuse 2 ein Überdruck über die Abblasvorrichtungen 8 an eine Umgebung 11 des Gehäuses 2 abbaubar ist.

Fig. 4 zeigt eine erste Ausführungsvariante eines Barriereelements 4. Das Barriereelement 4 umfasst als erste Schicht 5 eine poröse Polymermatrix und als zweite Schicht 6 ein hochtemperaturfestes Material, z. B. ein keramisches Gewebe.

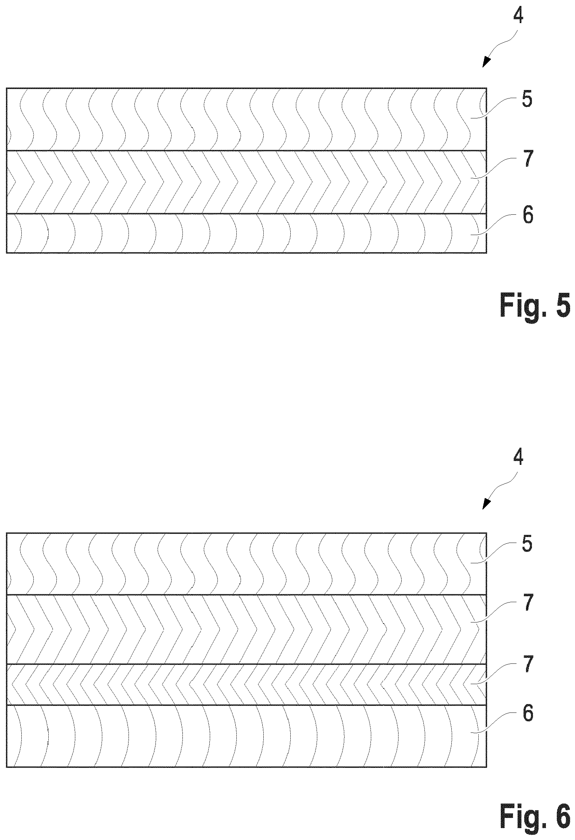

Fig. 5 zeigt eine zweite Ausführungsvariante eines Barriereelements 4. Das Barriereelement 4 umfasst als erste Schicht 5 eine poröse Polymermatrix, als zweite Schicht 6 einen porösen keramischen Schaum und als dritte Schicht 7 metallische Fasern, z. B. als Gewebe.

Fig. 6 zeigt eine zweite Ausführungsvariante eines Barriereelements 4. Das Barriereelement 4 umfasst als erste Schicht 5 eine poröse Polymermatrixfolie, als zweite Schicht 6 eine poröse hochtemperaturfeste Schicht sowie zwei dritte Schichten 7, ein metallisches Vlies und ein gesintertes poröses, metallisches Gewebe. Ausgehend von einer Batteriezelle 3 sind aufeinander gestapelt angeordnet zunächst das metallische Vlies (dritte Schicht 7), dann die poröse Polymermatrixfolie (erste Schicht 5), dann das metallische Gewebe (dritte Schicht 7) und abschließend die hochtemperaturfeste, ggf. keramische, Schicht (zweite Schicht 6) dargestellt.

### Bezugszeichenliste

- 1: Batterieanordnung
- 2: Gehäuse
- 3: Batteriezelle
- 4: Barriereelement
- 5: erste Schicht
- 6: zweite Schicht
- 7: dritte Schicht
- 8: Abblasvorrichtung
- 9: Bestandteil
- 10: Grenzdruck
- 11: Umgebung
- 12: Kraftfahrzeug
- 13: Fahrgastzelle
- 14: Traktionseinheit
- 15: Batteriemodul
- 16: Gas- und/ oder Partikelstrom
- 17: Öffnung
- 18: Boden

## Patentansprüche

1. Batterieanordnung (1), zumindest umfassend
• ein Gehäuse (2) und darin angeordnet
• zumindest eine Batteriezelle (3) sowie
• ein Barriereelement (4), das zwischen der Batteriezelle (3) und dem Gehäuse (2) angeordnet ist;
wobei das Barriereelement (4) einen mehrschichtigen Aufbau mit mindestens zwei Schichten (5, 6) aufweist; wobei eine erste Schicht (5) zumindest eine poröse Polymermatrix und eine zweite Schicht (6) zumindest ein gasdurchlässiges hochtemperaturfestes Material umfasst.

2. Batterieanordnung (1) nach Patentanspruch 1, wobei das hochtemperaturfeste Material ein poröser keramischer Schaum, eine poröse keramische Beschichtung oder ein keramisches Gewebe ist.

3. Batterieanordnung (1) nach einem der vorhergehenden Patentansprüche, wobei die poröse Polymermatrix ein Schaum oder eine poröse Folie ist.

4. Batterieanordnung (1) nach einem der vorhergehenden Patentansprüche, wobei das Barriereelement (4) zumindest eine dritte Schicht (7) aufweist, die ein metallisches Material umfasst.

5. Batterieanordnung (1) nach Patentanspruch 4, wobei das metallische Material ein faserförmiges oder ein poröses Material ist.

6. Batterieanordnung (1) nach einem der vorhergehenden Patentansprüche, wobei die zweite Schicht (6) zumindest durch eine andere Schicht (5, 6, 7) von der mindestens einen Batteriezelle (3) getrennt angeordnet ist.

7. Batterieanordnung (1) nach einem der vorhergehenden Patentansprüche, wobei innerhalb des Gehäuses (2) eine Mehrzahl von Batteriezellen (3) angeordnet sind, wobei zwischen jeder Batteriezelle (3) mindestens ein Barriereelement (4) angeordnet ist.

8. Batterieanordnung (1) nach einem der vorhergehenden Patentansprüche, wobei das Gehäuse (2) mindestens eine Abblasvorrichtung (8) aufweist, wobei im Fall eines aus der mindestens einen Batteriezelle (3) in das Gehäuse (2) hinein austretenden Bestandteils (9) der Batteriezelle (3) und bei Überschreiten eines Grenzdruckes (10) in dem Gehäuse (2) ein Überdruck über die mindestens eine Abblasvorrichtung (8) an eine Umgebung (11) des Gehäuses (2) abbaubar ist.

9. Batterieanordnung (1) nach einem der vorhergehenden Patentansprüche, wobei die Batterieanordnung (1) zur Anordnung in einem Kraftfahrzeug (12) in einer Position relativ zu einer Fahrgastzelle (13) des Kraftfahrzeugs (12) vorgesehen ist, wobei das mindestens eine Barriereelement (4) zumindest die mindestens eine Batteriezelle (3) von der Fahrgastzelle (13) zumindest teilweise abschirmt.

10. Kraftfahrzeug (12), zumindest umfassend eine Traktionseinheit (14) zum Antrieb des Kraftfahrzeuges (12) und eine Batterieanordnung (1) nach einem der vorhergehenden Patentansprüche zur Speicherung einer für den Antrieb der Traktionseinheit (14) erforderlichen Energiemenge.
